# EUROPÄISCHE PATENTANMELDUNG

(11) **EP 1 496 666 A1**
(43) Veröffentlichungstag der Anmeldung: **12.01.2005**
(21) Anmeldenummer: 04016225.7
(22) Anmeldetag: 09.07.2004
(51) Int. Cl.: H04L 29/06, G05B 19/418

(54) **Vorrichtung und Koppelgerät, so genannter transparenter Tunnel-Proxy, zur Sicherung eines Datenzugriffs**

(30) Priorität: 10.07.2003 DE 10331309
(71) Anmelder: SIEMENS AKTIENGESELLSCHAFT, 80333 München (DE)
(72) Erfinder: Arnold, Johann, 90530 Wendelstein (DE); Gerlach, Hendrik, 91058 Erlangen (DE); Herberth, Harald, 90522 Oberasbach (DE); Köbinger, Franz, 90475 Nürnberg (DE)

(57) **Zusammenfassung**

Die Erfindung betrifft eine Vorrichtung und ein Koppelgerät, einen so genannten transparenten Tunnel-Proxy (15) zur Sicherung eines Datenzugriffs eines ersten Teilnehmers (7) auf einen zweiten Teilnehmer (12), wobei der Tunnel-Proxy (15) zur Realisierung eines Endpunkts eines Tunnels (16) zu dem ersten Teilnehmer (12) ausgebildet ist, durch welchen Daten über ein unsicheres Netzwerk sicher übertragbar sind. Der Tunnelaufbau erfolgt im Tunnel-Proxy (15) stellvertretend für den nachgeschalteten zweiten Teilnehmer (12). Das hat den Vorteil, dass Sicherheitsfunktionen nachträglich in bestehende Netzwerke durch Einfügen von Tunnel-Proxys integriert werden können.

## Beschreibung

Die Erfindung betrifft eine Vorrichtung und ein Koppelgerät, einen so genannten transparenten Tunnel-Proxy, zur Sicherung eines Datenzugriffs eines ersten Teilnehmers oder mehrerer Teilnehmer, die in einem ersten Teilnetz eines Automatisierungsnetzes angeordnet sind, auf einen zweiten Teilnehmer oder mehrere Teilnehmer, die in einem zweiten Teilnetz eines Automatisierungsnetzes angeordnet sind.

Teilnehmer können beispielsweise Server, Programmiergeräte, Bedien- und Beobachtungstationen, Servicegeräte zur Wartung oder Diagnose, Automatisierungsgeräte, dezentrale Peripherie oder Feldgeräte sein, zum Beispiel Messumformer oder Stellglieder, die in einem gemeinsamen Automatisierungsnetz zur Übertragung von Daten miteinander verbunden sind. Sie sind Bestandteile eines Automatisierungssystems, das zur Überwachung eines technischen Prozesses, zum Beispiel eines Fertigungsprozesses, eingesetzt wird und an sich bekannt ist. Derartige Automatisierungsnetze wurden bisher hierarchisch in mehrere Ebenen eingeteilt, zum Beispiel Prozess-, Automatisierungs- und zentrale Leitebene. Dabei wurden Komponenten der jeweiligen Ebene über eine Datenübertragungseinheit, ein so genanntes Gateway, miteinander verbunden. Automatisierungskomponenten der Prozessebene und/oder der Automatisierungsebene wurden horizontal mittels eines so genannten Feldbussystems und zur nächst höheren Ebene, zum Beispiel zur zentralen Leit- oder Steuerebene, vertikal mittels eines Ethernet-Bussystems miteinander verbunden. Feldbusse sind speziell auf die Erfordernisse der Automatisierungstechnik ausgerichtet. Kommunikationsmedien und Protokolle für Feldbusse sind in der Bürowelt in der Regel nicht verbreitet. Da Zugriffe von der zentralen Leit- und Steuerebene auf die Automatisierungs- oder Feldebene nur über Gateways möglich waren, wurden Hackerangriffe auf die unteren Ebenen des Automatisierungsnetzes erschwert. Zunehmend erfolgt heute die horizontale Verbindung der Automatisierungskomponenten einer Ebene ebenfalls mittels eines Ethernet-Bussystems. Mit der zunehmenden Verbreitung von Ethernet auch auf den unteren Ebenen eines Automatisierungsnetzes wachsen die verschiedenen Ebenen enger zusammen und spezielle Gateways sind aus rein kommunikationstechnischer Sicht nicht länger notwendig. Damit sind Hackerangriffe auch auf die unteren Ebenen eines Automatisierungsnetzes leichter möglich.

Ein weiterer Trend ist die zunehmende Verschmelzung von Büround Produktionsnetzen, die als Teilbereiche eines Automatisierungsnetzes angesehen werden können. Daraus ergeben sich insbesondere aus sicherheitstechnischer Sicht neue Probleme. Über das Büronetz in das Produktionsnetz eingetragene Störungen der Automatisierungsgeräte können den Produktionsbetrieb unter Umständen empfindlich stören oder beeinträchtigen. Die damit verbundenen Risiken, zum Beispiel Produktionsausfälle bis hin zu Gefahren für Menschenleben, sind oft deutlich höher als bei Störungen, die auf ein Büronetz begrenzt sind. Störungen des Produktionsnetzes vom Büronetz aus können beispielsweise hervorgerufen werden durch Fehlbedienungen, zum Beispiel wegen Angabe falscher IP-Adressen, Viren, Trojaner oder Würmer, die versuchen, sich über Personal Computer des Büronetzes im Netzwerk auszubreiten, und die dabei unter Umständen auch den Bereich des Produktionsnetzes erreichen, weiterhin durch Mitarbeiter, die beispielsweise TCP/IP-Netzwerk-Tools ausprobieren oder durch Angriffe von Mitarbeitern innerhalb der automatisierungstechnischen Anlage, die, wenn sie passiver Natur sind, als Spionage und, wenn sie aktiver Natur sind, als Sabotage bezeichnet werden können. Es ist daher erforderlich, bestimmte Teile des Automatisierungsnetzes vor unerlaubten Zugriffen zu schützen.

Aus der DE 101 24 800 A1 ist es bekannt, funktions- und/oder geräterelevante Daten zwischen verschiedenen Geräten eines Prozessautomatisierungssystems zumindest zum Teil verschlüsselt auszutauschen. Dadurch soll eine flexible und zugleich sichere Handhabung ausgewählter wichtiger Daten des Prozessautomatisierungssystems ermöglicht werden. Die Verschlüsselung wird direkt in den Endgeräten vorgenommen. Dies erfordert eine größere Leistungsfähigkeit aller Endgeräte, die an einer verschlüsselten Datenübertragung beteiligt sind.

Auf der Internetseite unter der Adresse www.thought.net/jason/bridgepaper/node9.html wurde am 01.04.2003 ein Kapitel "bridging and IPsec" der Öffentlichkeit zugänglich gemacht. Es wird eine Bridge beschrieben, die um IPsec-Fähigkeiten erweitert ist. Auf einer Seite der Bridge eingehende Nachrichten im Ethernet-Format werden entsprechend dem IPsec-Protokoll, das auf Layer 3 des ISO-OSI 7-Schichten-Modells angesiedelt ist, verschlüsselt auf der anderen Seite der Bridge ausgegeben und können so geschützt vor Zugriffen über einen unsicheren Netzwerkabschnitt übertragen werden. Eine Anwendung auf Automatisierungsnetze ist nicht beschrieben.

Der Erfindung liegt die Aufgabe zugrunde, eine Vorrichtung und ein Koppelgerät zur Sicherung eines Datenzugriffs eines ersten Teilnehmers oder mehrerer Teilnehmer, die in einem ersten Teilnetz eines Automatisierungsnetzes angeordnet sind, auf einen zweiten Teilnehmer oder mehrere Teilnehmer, die in einem zweiten Teilnetz des Automatisierungsnetzes angeordnet sind, zu schaffen, die sich durch einen besonders geringen Aufwand auszeichnen.

Zur Lösung dieser Aufgabe weist eine Vorrichtung der eingangs genannten Art die in Anspruch 1 angegebenen Merkmale bzw. ein Koppelgerät die in Anspruch 6 angegebenen Merkmale auf. In den abhängigen Ansprüchen sind vorteilhafte Weiterbildungen der Erfindung beschrieben.

Unter dem Begriff "Tunnel" wird im Zusammenhang dieser Erfindung eine Verbindung zwischen zwei oder mehr Teilnehmern des Automatisierungsnetzes verstanden, die bezüglich Authentizität, Integrität und/oder Vertraulichkeit eine in vorteilhafter Weise sichere Datenübertragung gewährleistet. Durch den Tunnel werden die gesamten Telegrammdaten, also Nutzdaten und Header-Informationen eines Telegramms, gesichert übertragen. Zum Aufbau eines Tunnels sind gemeinsame Geheimnisse (Shared Secrets) notwendig. Wird der Tunnel zwischen zwei Partnern aufgebaut, so müssen beide Partner das gleiche Shared Secret oder ein zueinander passendes Public/Private-Key-Paar besitzen. Soll der Tunnel auf mehr als zwei Partner (globaler Tunnel) ausgedehnt werden, so müssen beispielsweise Shared Keys auf alle beteiligten Teilnehmer verteilt werden. Im Falle der Verwendung von Public/Private-Keys müssen bei mehr als zwei Partnern alle Partner untereinander derartige Schlüsselpaare besitzen. Bei der Ver- oder Entschlüsselung von Daten muss das jeweils für den aktuellen Partner geltende Schlüsselpaar herangezogen werden. Die Verwendung von Public/Private-Key-Paaren ist allerdings besonders in größeren Systemen eher kompliziert und aufwendig. Im Falle eines Shared Secrets ist das Verfahren einfach, da alle Teilnehmer den gleichen Schlüssel besitzen, der für alle Teilnehmer verwendbar ist.

Die Erfindung erlaubt neben der Entkopplung von Büronetz und Produktionsnetz zudem einen aufwandsarmen Schutz von Teilnetzen, zum Beispiel Automatisierungszellen, innerhalb des Produktionsnetzes. Dadurch sind unbeabsichtigte Wechselwirkungen, wie sie zum Beispiel in einer Inbetriebnahmephase von Teilabschnitten auftreten können, vermeidbar. Mögliche interne Angreifer, die Zugang zum Produktionsnetz bekommen, zum Beispiel Mitarbeiter von Montagefirmen, werden in ihren Möglichkeiten zur Störung des Automatisierungssystems deutlich eingeschränkt.

Die Realisierung eines Tunnelendpunktes erfolgt in einem Tunnel-Proxy mit Software- und/oder Hardwaremodulen. Dieser übernimmt eine Stellvertreterfunktion für Geräte, die nicht selbst in der Lage sind, einen Tunnelendpunkt zu realisieren. Damit ist die Vorrichtung zur Sicherung eines Datenzugriffs in vorteilhafter Weise in bereits bestehenden Automatisierungsnetzen anwendbar. Die für den Tunnelaufbau erforderlichen Ressourcen werden nur im vorgeschalteten Tunnel-Proxy benötigt, so dass die dahinter befindlichen Teilnehmer oder Teilnetze mit geringeren Ressourcen auskommen.

Aufgrund der Verwendung eines transparenten Tunnel-Proxys als Stellvertreter für einzelne Teilnehmer oder mehrere Teilnehmer, die sich in einem Teilnetz befinden, lässt sich die Vorrichtung zur Sicherung eines Datenzugriffs nachträglich in bestehende Netzwerke integrieren, ohne dass hierzu größere Umstellungen der bestehenden Teilnehmerparametrierung erforderlich wären. Die Automatisierungsgeräte, die unter Umständen Altgeräte sein können und über geringe Leistungsressourcen verfügen, können unverändert bleiben. Neben dem Aspekt der Weiterverwendbarkeit der Altgeräte kann diese Eigenschaft beispielsweise auch dann von Bedeutung sein, wenn die Parametrierung auf den Automatisierungsgeräten selbst nicht mehr verändert werden darf, zum Beispiel weil sie von Prüfstellen abgenommen wurden und Änderungen neue Prüfungen oder Nachweise erfordern würden. Durch den transparenten Tunnel-Proxy als Stellvertreter werden die nachgeschalteten Teilnehmer vom unsicheren Netz getrennt. Sie können in der Regel Kommunikation von außen über die Tunnel ohne Weiteres akzeptieren. Bei anderer Kommunikation muss jedoch geprüft werden, ob sie für die Teilnehmer zugelassen ist. Diese Prüfung wie auch die Tunnelkommunikation selbst erfordern Ressourcen. Zudem können viele Broadcast-Telegramme oder zusätzliche Belastungen beispielsweise aufgrund UDP-Flooding-Angriffen aus dem Büronetz zur erheblicher Last am Tunnelendpunkt führen. Wird der Tunnelendpunkt im transparenten Tunnel-Proxy als Stellvertreter realisiert, so fällt die Last bei diesem an. Die Ressourcen der nachgeschalteten Teilnehmer können im Automatisierungsnetz weiterhin vollständig für die automatisierungstechnischen Funktionen genutzt werden. Würde die Last bei diesen Teilnehmern bewältigt werden müssen, könnten sie bei der Erfüllung ihrer automatisierungstechnischen Funktionen beeinträchtigt werden und schlimmstenfalls ausfallen. Ohne Stellvertreter wären die Automatisierungsgeräte als Netzwerkteilnehmer direkt am unsicheren Netz sichtbar und daher auch angreifbar. Bei Fehlern in der Implementierung eines auf den Teilnehmern selbst abgewickelten Tunnelprotokolls könnten sie bei Angriffen in ihrer Funktion beeinträchtigt werden. Da die Verwendung sicherer Tunnel nicht nur einen Zugriffsschutz sondern zudem einen Schutz der Daten vor Abhören und Veränderung (Privacy, Integrity) gewährleistet, kann die Übertragung der Daten beispielsweise zwischen zwei Tunnel-Proxys über ein unsicheres Netz erfolgen. In diesem Bereich werden an die Sicherheit der Übertragungsmedien keine Security-Anforderungen gestellt. Paarweise Tunnel, das heißt Tunnel zwischen zwei Teilnehmern, ermöglichen es, die einzelnen bilateralen Verbindungen bezüglich der Übertragungssicherheit voneinander zu trennen. Ein globaler Tunnel, das heißt ein Tunnel mit mehr als zwei Endpunkten, kann gegenüber einem paarweisen Tunnel zum Sparen von Ressourcen beitragen, die gerade in Automatisierungsgeräten oft begrenzt sind. Das Mischen paarweiser Tunnel und globaler Tunnel, das heißt die gleichzeitige Existenz verschiedenartiger Tunnel, ermöglicht eine bessere Skalierung des Automatisierungsnetzes. Besonders wichtige Kommunikationsverbindungen werden über paarweise Tunnel, weniger kritische Verbindungen über einen gemeinsamen, globalen Tunnel eingerichtet.

Der Tunnel-Proxy wird adresstechnisch völlig transparent realisiert. Er benötigt für seine Funktion keine eigene IP-Adresse. Lediglich für Administrationszwecke wird ihm eine eigene IP-Adresse vergeben. Der Tunnel-Proxy reagiert auf IP-Adressen der dahinterliegenden Geräte. Durch diese Reaktion auf Adressen, die nicht seine eigenen sind, wird die Transparenz erreicht. Die Tunnelenden liegen bei nichttunnelfähigen Endgeräten real auf dem Tunnel-Proxy, virtuell aber auf den Endgeräten, das heißt, aus der Sicht eines anderen Netzwerkteilnehmers, der am gegenüberliegenden Tunnelendpunkt oder hinter diesem angeordnet ist, sieht es so aus, als ob der Tunnelendpunkt an dem hinter dem Tunnel-Proxy befindlichen Netzwerkteilnehmer liegen würde. Für welche IP-Adressen, das heißt für welche Netzwerkteilnehmer, sich ein transparenter Tunnel-Proxy zuständig fühlt, kann durch Konfiguration vorgegeben werden. Eventuell ist auch ein automatisches Lernen der Konfiguration möglich.

Wird ein nichttunnelfähiges Endgerät hinter einem transparenten Tunnel-Proxy durch ein tunnelfähiges Endgerät ersetzt oder eine Kaskadierung von transparenten Tunnel-Proxys vorgenommen, das heißt hinter einem transparenten Tunnel-Proxy ein weiterer transparenter Tunnel-Proxy angeordnet, so muss lediglich die Konfiguration im vorgeschalteten transparenten Tunnel-Proxy so geändert werden, dass er nicht mehr für nachfolgende tunnelfähige Geräte stellvertretend einen Tunnelendpunkt realisiert. Dabei ändert sich für die Endgeräte am gegenüberliegenden Tunnelendpunkt bei einer solchen Umkonfiguration nichts. Sie bauen aus ihrer Sicht immer einen Tunnel zu einem anderen Endgerät auf, unabhängig davon, wie viele transparente Tunnel-Proxys im Übertragungsweg liegen.

Da in der Automatisierungstechnik im Unterschied zur Bürotechnik Netzwerke projektiert werden, können bei geeigneter Auslegung eines Projektierungsgeräts aus dieser Projektierung eine Reihe von Parametrier- und/oder Konfigurierdaten für den transparenten Tunnel-Proxy abgeleitet werden. Für die Konfigurierung werden somit keine oder geringe IT-Kenntnisse eines Bedieners vorausgesetzt. Projektiert und/oder parametriert werden üblicherweise die Geräte des Automatisierungssystems und ihre Netzwerkverbindungen. Die Projektierung der Kommunikationsverbindungen ist nötig, damit eine Kommunikation zwischen den Geräten ermöglicht wird. Aus der Projektierung des Netzes und der Kommunikationsteilnehmer lassen sich beispielsweise als Information ableiten:
- IP-Adressen der durch den Tunnel-Proxy vertretenen Geräte,
- IP-Adresse des Teilnehmers am oder hinter dem gegenüberliegenden Tunnelendpunkt und/oder
- falls sich hinter dem gegenüberliegenden Tunnelendpunkt ein Teilnetz befindet, Netzwerkadresse des Teilnetzes.

Auch der transparente Tunnel-Proxy gehört zu den Netzwerkkomponenten, selbst wenn er keine eigene IP-Adresse besitzt. Die Festlegung der Teilnehmer, für welche der Tunnel-Proxy stellvertretend einen Tunnelendpunkt realisiert, kann beispielsweise durch Positionierung des Tunnel-Proxys in einem Netzwerkplan erfolgen. Ein an seinem für eine Realisierung eines Tunnelendpunkts geeigneten Port angeschlossenes Netzwerk wird dann als unsicheres Netz betrachtet, während die am anderen Port befindlichen Teilnehmer als die Geräte gelten können, für welche der Tunnel-Proxy als Stellvertreter bezüglich der Tunnelrealisierung wirkt. Die automatisch erzeugten Parameterdaten werden zur Parametrierung des Tunnel-Proxy an diesen vom Projektierungsgerät über das Netzwerk übertragen.

Die Verwendung des Layer 3 (Network Layer) des ISO-OSI 7-Schichten-Modells als Basis für das Tunnelprotokoll bietet den Vorteil der Kompatibilität mit der in Automatisierungsnetzen vorhandenen Infrastruktur. Durch Zusatzmaßnahmen, z. B. Einpacken eines Ethernet-Pakets in ein IP-Paket mit Hilfe von EtherIP, können auch Ebene-2-Pakete, wie sie in der Automatisierungstechnik zum Teil vorkommen, getunnelt werden.

Besonders vorteilhaft ist die Realisierung eines Tunnelendpunkts als transparenter Tunnel-Proxy mit IPsec-Protokoll. Damit wird ein außerhalb der Automatisierungstechnik bereits weit verbreitetes und erprobtes Protokoll verwendet. Im Falle von IPsec als Basis für das Tunnelprotokoll können Personal Computer mit üblichen Betriebssystemen einen gegenüber liegenden Tunnelendpunkt realisieren.

In vorteilhafter Weise wird die konstruktive Ausgestaltung des transparenten Tunnel-Proxys derart gewählt, dass er für den Einsatz in einem Automatisierungssystem geeignet ist. Je nach Einsatzfall wird er so ausgelegt, dass die erforderliche Schutzklasse, beispielsweise Staub-, Wasser- oder Explosionsschutz, eingehalten wird. Bei geeigneter Wahl der Bauform ist eine Hutschienen- oder Schrankmontage möglich. Vorteilhaft ist eine Stromversorgung mit geringer Spannung, beispielsweise 24 V.

Wenn ein zur Realisierung eines Tunnelendpunkts geeigneter Port vom anderen Port des transparenten Tunnel-Proxys durch eine Markierung unterscheidbar ist, so hat dies den Vorteil, dass die Verkabelung vereinfacht und Verkabelungsfehler reduziert werden.

Tunnel-Proxys können kaskadiert werden. Dabei kennt jeder Tunnel-Proxy beispielsweise aus seiner Parametrierung die ihm zugeordneten Geräte, für die er stellvertretend Tunnel aufbaut. Tunnelaufbauwünsche für Geräte, für welche er nicht als Stellvertreter fungiert, werden von ihm nicht bearbeitet sondern weitergeleitet. Die Weiterleitung kann beispielsweise per Unicast-Telegramm direkt an den Teilnehmer mit dem gewünschten Tunnelendpunkt oder per Broadcast-Telegramm in das hinter dem Tunnel-Proxy liegende Teilnetz erfolgen, wobei das Broadcast-Telegramm vom Teilnehmer mit dem gewünschten Tunnelendpunkt beantwortet wird. Im Falle einer Kaskadierung kann dieser Tunnelendpunkt durch einen weiteren Tunnel-Proxy realisiert werden. Alternativ zur beschriebenen Weiterleitung von Tunnelaufbauwünschen kann ein vorgeschalteter Tunnel-Proxy als Stellvertreter für alle unterlagerten Tunnel-Proxys fungieren, selbst den gewünschten Tunnelendpunkt realisieren und sichere Tunnel zwischen den kaskadierten Tunnel-Proxys aufbauen, über welche die Daten sicher zu diesen übertragen werden. Die Kaskadierbarkeit von Tunnel-Proxys hat den Vorteil, dass die Sicherheit in einem Automatisierungsnetz besser skaliert werden kann. Beispielsweise kann ein Tunnel-Proxy zur Sicherung eines Datenzugriffs auf eine Automatisierungszelle zuständig sein und zusätzlich ein Teil der Geräte innerhalb der Automatisierungszelle über einen unterlagerten Tunnel-Proxy abgesichert werden. Dadurch können Zugriffe auf diese gesondert abgesicherten Geräte von anderen Geräten der Automatisierungszelle verhindert werden. Zusätzlich ist auch der Datenverkehr zwischen den gesondert abgesicherten Geräten von den übrigen Geräten der Zelle nicht angreifbar und Integrität sowie Vertraulichkeit der Daten werden gewahrt.

Anhand der Zeichnungen, in denen ein Ausführungsbeispiel der Erfindung dargestellt ist, werden im Folgenden Ausgestaltungen und Vorteile der Erfindung näher erläutert.

Es zeigen:
- Figur 1: ein Blockschaltbild eines Automatisierungsnetzes und
- Figur 2: ein Blockschaltbild eines transparenten Tunnel-Proxys.

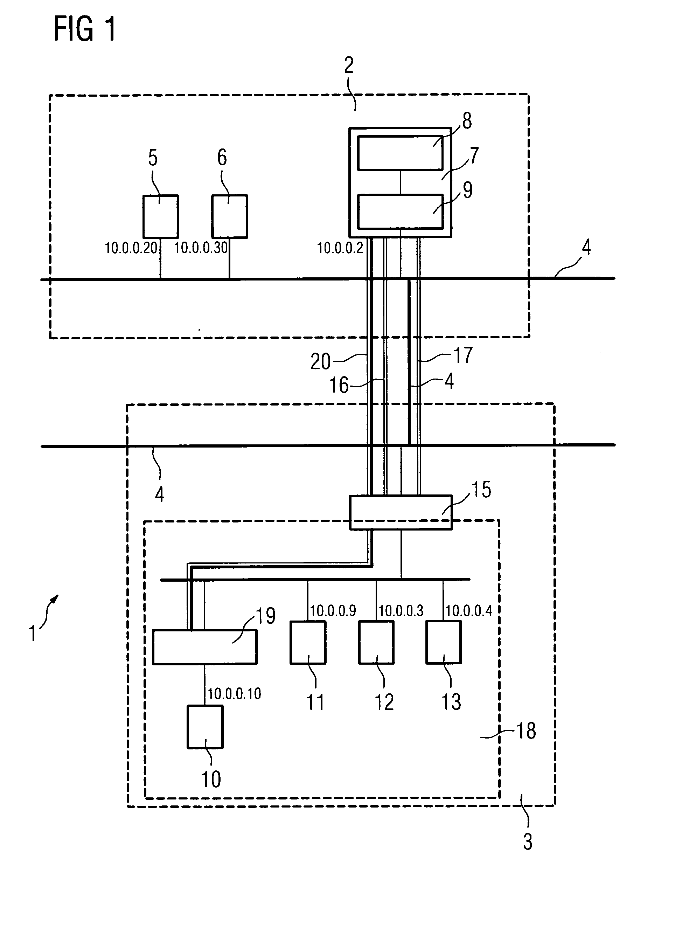

In Figur 1 ist der prinzipielle Aufbau eines Automatisierungsnetzes 1 dargestellt. Gezeigt sind im Wesentlichen die an der Kommunikation teilnehmenden Geräte, häufig als Teilnehmer bezeichnet, und dazu erforderliche physikalische Verbindungen. Weitere Teile des Automatisierungssystems in einer prozesstechnischen Anlage sind der Übersichtlichkeit wegen nicht dargestellt. Das Automatisierungsnetz 1 ist in dieser Darstellung unterteilt in ein Büronetz 2 und ein Produktionsnetz 3. Diese Darstellung wurde in Anlehnung an die bisherige Situation gewählt, in welcher Büronetz und Produktionsnetz voneinander getrennt ausgebildet und über ein Gateway miteinander verbunden waren. Über das Büronetz eingetragene Hackerangriffe konnten daher nur schwer in das Produktionsnetz gelangen. In dem gezeigten Ausführungsbeispiel sind Büronetz 2 und Produktionsnetz 3 über eine Leitung 4 direkt miteinander verbunden und damit quasi verschmolzen. Die Datenübertragung erfolgt in beiden Netzen beispielsweise mit Ethernet TCP/IP. Im Büronetz 2 befinden sich nicht prozessnahe Geräte, zum Beispiel ein Server 5, ein Büro PC 6 als Bedien- und Beobachtungsgerät und ein Büro PC 7 als Programmiergerät oder Projektierungsgerät, der in eine Applikation 8 und eine Tunnelkomponente 9 unterteilt ist. Prozessnahe Geräte, zum Beispiel ein Automatisierungsgerät 10, ein Bedien- und Beobachtungsgerät 11, ein Messumformer 12 und ein Automatisierungsgerät 13 sind in dem Produktionsnetz 3 angeordnet. Die den einzelnen Geräten zugeordneten IP-Adressen sind jeweils unmittelbar beim zeichnerischen Symbol der Geräte angegeben. Selbstverständlich umfassen das Büronetz 2 und das Produktionsnetz 3 noch weitere Geräte, die in der Zeichnung der Übersichtlichkeit wegen nicht dargestellt sind. Die dargestellten Geräte des Produktionsnetzes 3 gehören zur selben Automatisierungszelle 18. Ihnen ist ein transparenter Tunnel-Proxy 15 vorgeschaltet, der als Stellvertreter für den Messumformer 12 und das Automatisierungsgerät 13 einen Endpunkt eines Tunnels 16 bzw. eines Tunnels 17 realisiert. Die beiden gegenüberliegenden Tunnelendpunkte werden durch die Tunnelkomponente 9 des Personal Computers 7 gebildet. Der transparente Tunnel-Proxy 15 ist somit als Tunnelendpunkt zuständig für die IP-Adressen 10.0.0.3 und 10.0.0.4 des Messumformers 12 bzw. des Automatisierungsgeräts 13. Die beiden Geräte 12 und 13 kommen daher mit geringeren Ressourcen aus, da sie nicht in der Lage sein müssen, einen Tunnelendpunkt zu realisieren. Ein weiterer transparenter Tunnel-Proxy 19 ist dem Automatisierungsgerät 10 vorgeschaltet. Der Tunnel-Proxy 19 realisiert einen Tunnelendpunkt eines Tunnels 20, der in einer Kaskadierung durch den Tunnel-Proxy 15 hindurch geführt ist und ebenfalls an der Tunnelkomponente 9 des Personal Computers 7 endet. Damit ist es möglich, unberechtigte Zugriffe des Bedien- und Beobachtungsgeräts 11 aus der Automatisierungszelle 18 heraus auf das Automatisierungsgerät 10 zu verhindern. Der Tunnel-Proxy 19 ist als Tunnelendpunkt zuständig für die IP-Adresse 10.0.0.10 des Automatisierungsgeräts 10. Die Tunnel 16, 17 und 20 sind mit einem symmetrischen Verschlüsselungsverfahren realisiert, in welchem die beiden Tunnelendpunkte der einzelnen Tunnel über einen gemeinsamen geheimen Schlüssel verfügen. Die Tunnel 16, 17 und 20 sind lediglich zur besseren Verdeutlichung in Figur 1 getrennt von der Verbindungsleitung 4 dargestellt. Selbstverständlich werden durch Tunnel übertragene Telegramme über die Verbindungsleitung 4 übertragen.

Der Personal Computer 7 dient im Automatisierungsnetz 1 als Projektierungsgerät, mit welchem neben der in Automatisierungsnetzen üblichen Projektierung bei der Verwendung von transparenten Tunnel-Proxys der Projekteur zusätzlich festlegt, wo die Tunnel-Proxys angeordnet sind und welche dahinterliegenden Teilnehmer jeweils durch sie geschützt werden sollen. Diese Eingaben sind für einen Automatisierungstechniker in der Regel leicht vorzunehmen. Beispielsweise wird vor ein Teilnetz einer Automatisierungszelle ein Tunnel-Proxy gesetzt, wie im gezeigten Ausführungsbeispiel der Tunnel-Proxy 15 vor die Automatisierungszelle 18. Mit dem Projektierungsgerät Personal Computer 7 werden die Kommunikationspartner sowie deren Adressen, zum Beispiel IP-Adressen, Netzwerkverbindungen, über die diese Kommunikationspartner miteinander verbunden sind, Automatisierungsfunktionen und deren Kommunikation untereinander sowie die Position der Tunnel-Proxys im Netzwerk festgelegt. Anhand dieser Festlegungen können für den Aufbau der Tunnel beispielsweise folgende Parameter automatisch ermittelt werden: Adressen der Geräte, für welche im Tunnel-Proxy ein Tunnelendpunkt zu realisieren ist, mit welchen anderen Tunnelendpunkten muss ein Tunnel aufgebaut werden, Erzeugung der Geheimnisse und/oder Zertifikate.

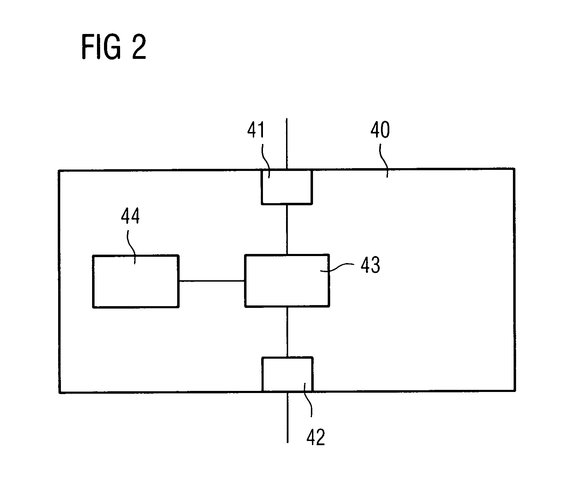

Figur 2 zeigt den prinzipiellen Aufbau eines transparenten Tunnel-Proxys 40, der mit zwei Ports 41 und 42 an ein erstes bzw. an ein zweites Netz angeschlossen werden kann und zur Bearbeitung der Telegramme einen Proxy-Kern 43 aufweist. Damit der Tunnel-Proxy in der Lage ist, einen Tunnelendpunkt zur gesicherten Übertragung von Daten zu einem anderen Tunnelendpunkt zu realisieren, ist zusätzlich ein so genannter Secure Channel Converter 44 vorhanden. Alle an einem Port eingehenden Telegramme werden durch ihn entsprechend den jeweiligen Sicherheitseinstellungen geprüft. Ein Ethernet-Paket wird in ein IP-Paket überführt und mit zum Beispiel IPsec-Protokoll mit Verschlüsselung, Integritätssicherung, Authentifizierung und/oder Replay-Schutz gesichert. Danach ist das Telegramm wie ein normales Paket des Tunnelprotokolls aufgebaut und kann über einer IP-Infrastruktur, die beispielsweise auch Router enthält, transportiert werden. Die Sicherungsmechanismen verhindern unerlaubte Veränderungen des Tunnelpakets. Im Empfangsbetrieb, das heißt, wenn ein Tunnelpaket an einem Port eingeht, wird das Paket zunächst beispielsweise auf folgende Eigenschaften geprüft:
- ist die maximal zulässige Empfangsdatenrate überschritten (DoS-Schutz),
- ist das empfangene Telegramm vom Typ des Tunnelprotokolls, bei IPsec zum Beispiel AH oder ESP,
- stammt das Paket von einem berechtigten Sender (Authentifizierung),
- ist das Paket unverändert (Integrität) und/oder
- wurde das Paket bereits empfangen (Replay-Schutz) ?

Fällt eine dieser Prüfungen negativ aus, so wird das Paket verworfen und gegebenenfalls ein Logging-Eintrag für eine Systemanalyse vorgenommen. Werden diese Prüfungen erfolgreich absolviert, so wird das Paket, falls der Tunnel-Proxy einen Tunnelendpunkt für die jeweilige IP-Adresse realisiert, in entpackter Form, das heißt in der ursprünglich durch den Teilnehmer gesendeten Form, an den Empfänger weitergeleitet. Die Entpackung kann gegebenenfalls eine Entschlüsselung einschließen.

Die Realisierung der Stellvertreterfunktion durch einen transparenten Tunnel-Proxy hat gegenüber der Verwendung eines bekannten VPN-Routers beispielsweise den Vorteil, dass er für den nachträglichen Einbau in vorhandene flache Netze, wie sie in der Automatisierungstechnik häufig anzutreffen sind, geeignet ist. Ein VPN-Router würde nämlich eine Bildung von Subnetzen erfordern, weiterhin eine spezielle Konfiguration auf den Teilnehmern, die sicher über den VPN-Tunnel kommunizieren wollen, da die IP-Adresse des VPN-Routers als Gateway bei allen Kommunikationspartnern eingetragen werden muss, und der VPN-Router könnte nur IP-Pakete tunneln. Ebene-2-Pakete, wie sie in der Automatisierungstechnik zum Teil vorkommen, würden durch den VPN-Router daher nicht getunnelt und nach Einführen von VPN-Routern im Automatisierungsnetz würden nicht mehr alle Protokolle funktionieren. Dagegen kann der beschriebene Tunnel-Proxy 40 nahezu rückwirkungsfrei in ein bestehendes Netzwerk integriert werden. Er benötigt keine oder - je nach Realisierung - eine IP-Adresse, keine Subnetzbildung, keine Neukonfiguration der an der Kommunikation beteiligten Endgeräte und der gesamte Verkehr ab Ebene 2 des 7-Schichten-Modells kann getunnelt werden.

Abweichend von dem in Figur 1 dargestellten Ausführungsbeispiel kann sich der Teilnehmer 7 ähnlich dem Teilnetz der Automatisierungszelle 18 ebenfalls in einem Teilnetz mit mehreren Teilnehmern befinden, deren Datenübertragung über das unsichere Netzwerk durch einen gemeinsamen, vorgeschalteten, transparenten Tunnel-Proxy abgesichert wird. In diesem Fall werden beide Endpunkte der Tunnel durch jeweils einen transparenten Tunnel-Proxy gebildet.

## Patentansprüche

1. Vorrichtung zur Sicherung eines Datenzugriffs eines ersten Teilnehmers (7) oder mehrerer Teilnehmer, die in einem ersten Teilnetz eines Automatisierungsnetzes (1) angeordnet sind, auf einen zweiten Teilnehmer (12) oder mehrere Teilnehmer (12, 13), die in einem zweiten Teilnetz (18) des Automatisierungsnetzes (1) angeordnet sind, mit zumindest einem so genannten transparenten Tunnel-Proxy (15), der dem zweiten Teilnehmer (12) bzw. den Teilnehmern (12, 13) des zweiten Teilnetzes (18) vorgeschaltet ist, zum Aufbau eines so genannten Tunnels (16, 17) zu dem ersten Teilnehmer bzw. den Teilnehmern des ersten Teilnetzes, durch welchen Daten über ein unsicheres Netzwerk gesichert übertragbar sind, wobei der Tunnel-Proxy den Tunnel stellvertretend für den zweiten Teilnehmer bzw. stellvertretend für die Teilnehmer des zweiten Teilnetzes aufbaut.

2. Vorrichtung nach Anspruch 1, **dadurch gekennzeichnet, dass** ein Projektierungsgerät (7) vorgesehen ist zur Projektierung des Automatisierungsnetzwerks (1), durch welches Parameterdaten des Tunnel-Proxy (15) automatisch erzeugbar und zum Tunnel-Proxy (15) übertragbar sind.

3. Vorrichtung nach Anspruch 1 oder 2, **dadurch gekennzeichnet, dass** zur Realisierung des Tunnelendpunkts das IPsec-Protokoll anwendbar ist.

4. Vorrichtung nach einem der vorhergehenden Ansprüche, **dadurch gekennzeichnet, dass** der Tunnel-Proxy (15) konstruktiv für den Einsatz in einem Automatisierungssystem geeignet ist.

5. Vorrichtung nach einem der vorhergehenden Ansprüche, **dadurch gekennzeichnet, dass** einem Tunnel-Proxy (19) zur Kaskadierung ein weiterer Tunnel-Proxy (15) vorschaltbar ist.

6. Koppelgerät, so genannter transparenter Tunnel-Proxy, zur Sicherung eines Datenzugriffs eines ersten Teilnehmers (7) oder mehrerer Teilnehmer, die in einem ersten Teilnetz eines Automatisierungsnetzes angeordnet sind, auf einen zweiten Teilnehmer (12) oder mehrere Teilnehmer (12, 13), die in einem zweiten Teilnetz (18) des Automatisierungsnetzes angeordnet sind, wobei der Tunnel-Proxy (15) dem zweiten Teilnehmer bzw. den Teilnehmern des zweiten Teilnetzes vorschaltbar ist und eine Einrichtung (44), einen so genannten Secure Channel Converter, aufweist zum Aufbau eines so genannten Tunnels zu dem ersten Teilnehmer bzw. den Teilnehmern des ersten Teilnetzes, durch welchen Daten über ein unsicheres Netzwerk gesichert übertragbar sind, wobei der Tunnel durch den Tunnel-Proxy stellvertretend für den zweiten Teilnehmer bzw. die Teilnehmer des zweiten Teilnetzes aufbaubar ist.
